# EUROPEAN PATENT APPLICATION

(11) **EP 4 191 505 A1**
(43) Date of publication of application: **07.06.2023**
(21) Application number: 21849752.7
(22) Date of filing: 21.07.2021
(51) Int. Cl.: G06Q 40/04

(54) **INFORMATION PROCESSING DEVICE, METHOD FOR CONTROLLING INFORMATION PROCESSING DEVICE, AND PROGRAM**

(30) Priority: 27.07.2020 JP 2020126360
(71) Applicant: Kotaeru Holdings Inc., Tokyo 100-6390 (JP)
(72) Inventor: MATSUDA Yoshinari, Tokyo 100-6326 (JP)
(74) Representative: Murgitroyd & Company
(86) International application number: PCT/JP2021/027359
(87) International publication number: WO 2022/024927

(57) **Abstract**

Provided is means for rewarding employees or the like according to their contribution to a company. An information processing device includes first storage means for storing first trust information that is information indicating that share options have been entrusted from a trustor to a first trustee, inquiry means for inquiring whether to designate a beneficiary for all or some of the share options in a certain period of time before occurrence of a beneficiary designation event of a trust indicated by the first trust information, response receiving means for receiving a response to an inquiry from the inquiry means, and second storage means for, in a case where the response received by the response receiving means indicates that all beneficiaries are not designated, storing second trust information that is information indicating that, among the share options related to the first trust information, share options for which no beneficiary has been designated have been entrusted from the trustor to a second trustee.

## Description

### [Technical Field]

The present invention relates to an information processing device, a control method for the information processing device, and a program.

### [Background Art]

In the related art, a stock option (also referred to as a "share option") for granting the right to purchase a company's stock at an exercise price to a company officer, an employee, or a related party (hereinafter referred to as an "employee or the like") is known. With a share option, the more a stock price of the company's stock rises above the exercise price, the greater the profit. Therefore, an employee or the like who is granted the share option makes efforts to increase the company's value in order to raise the stock price.

Patent Literature 1 discloses a technique in which a securities company provides an employee or the like with funds as a countermeasure against a situation in which an employee who has been granted a share option cannot exercise the share option because the employee or the like cannot provide the funds for the exercise price. According to this, it is possible to promote the exercise of the right by receiving a loan for an employee or the like who has been unable to exercise the right due to lack of funds.

### [Citation List]

### [Patent Literature]

[Patent Literature 1]
Japanese Patent Laid-Open No. 2005-56095

### [Summary of Invention]

### [Technical Problem]

In the related art, a person to be granted a share option is determined when the share option is issued. Since an exercise price of a share option is determined according to a stock price when the share option is granted to an employee or the like, an employee or the like who is granted a share option when the stock price is low and an employee or the like who is granted a share option after the stock price rises have the share options of different values. However, an employee or the like who is granted a share option after a stock price rises may make a greater contribution to a company, and in this case, there is room for improvement in the use of a share option since actual contribution to the company or the like is not reflected.

The present invention has been made in order to solve the above problems, and an object thereof is to provide means for making it possible to grant a number of share options according to the degree of contribution to a company to an employee or the like in stages by using a trust and causing a trustee to temporarily manage a share option.

### [Solution to Problem]

According to the present invention, there is provided an information processing device including first storage means for storing first trust information that is information indicating that share options have been entrusted from a trustor to a first trustee; inquiry means for inquiring whether to designate a beneficiary for all or some of the share options in a certain period of time before occurrence of a beneficiary designation event of a trust indicated by the first trust information; response receiving means for receiving a response to an inquiry from the inquiry means; and second storage means for, in a case where the response received by the response receiving means indicates that all beneficiaries are not designated, storing second trust information that is information indicating that, among the share options related to the first trust information, share options for which no beneficiary has been designated have been entrusted from the trustor to a second trustee.

### [Advantageous Effects of Invention]

According to the present invention, it is possible to provide means for giving an employees or the like rewards or incentives according to his/her degree of contribution to a company.

### [Brief Description of Drawings]

FIG 1 is a block diagram for schematically describing an operation of a share option management system according to a first embodiment of the present invention.
FIG 2 is a block diagram showing a schematic configuration of a share option management system 50 according to the first embodiment of the present invention.
FIG 3 is a block diagram showing a configuration of each information processing device shown in FIG 2.
FIG 4 is a diagram showing an example of trust information stored in a storage unit 103 of an information processing device 16a shown in FIG 2.
FIG 5 is a flowchart showing a process performed by the share option management system 50.
FIG 6 is a flowchart showing an example of a process for designating a temporary grantee.

### [Description of Embodiments]

Hereinafter, embodiments of an information processing device, a control method for the information processing device, and a program according to the present invention will be described with reference to the drawings.

### [First embodiment]

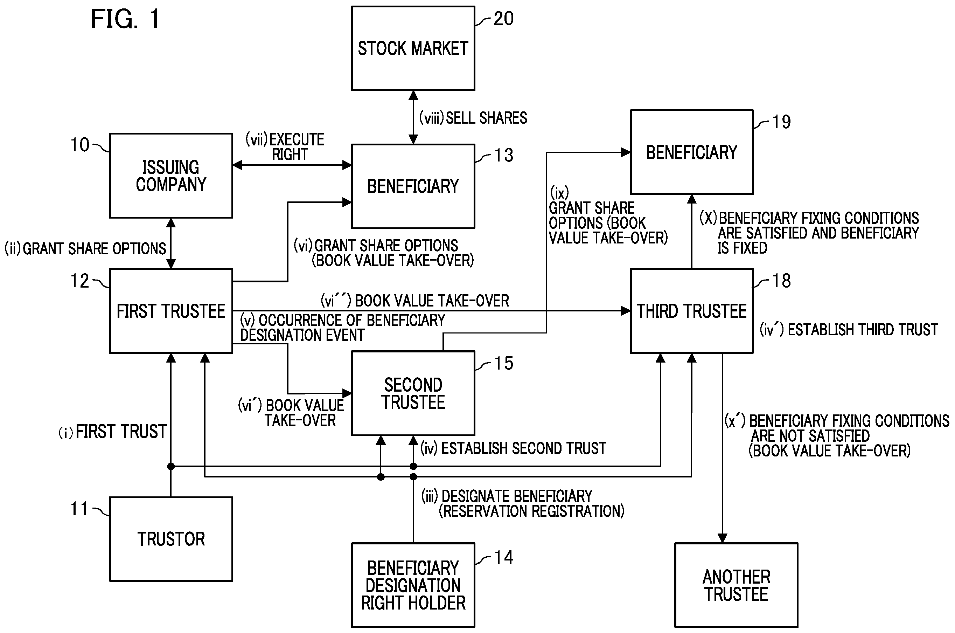

FIG 1 is a block diagram for schematically describing an operation of a share option management system according to a first embodiment of the present invention. First, referring to FIG 1, a scheme of management of a share option in the present embodiment will be described.

In the present embodiment, management of a share option will be described, but the present invention can also be applied to other rights. For example, the present invention can also be applied to a call option management system that manages a call option that is a right to acquire shares at an exercise price. A share option is a right to acquire shares from an issuing company at the current exercise price, but a call option is a right to acquire shares from a shareholder at an exercise price rather than from an issuing company, that is, a counterparty to which a request can be made differs. In the case of a call option, there is a scheme in which a major shareholder (usually an owner-manager) entrusts the call option in order to transfer shares the major shareholder owns to a future contributor (not only entrusts the call option, but also may entrust money to be paid to the major shareholder in order for a trustee to acquire the call option set by the major shareholder). The present invention can also be applied to a virtual currency management system that manages virtual currency. Virtual currency is issued by an issuer, and generally has higher liquidity and has thus a higher value. Also, there is a need to distribute the virtual currency to influencers or collaborators (including executives and employees or the like of an issuing corporation) and to make more transactions at virtual currency exchanges. In the case of virtual currency, there is a scheme in which an issuer or a person who has a large amount of virtual currency entrusts his/her own virtual currency to be transferred to a future contributor (not only entrusts virtual currency, but also may entrust money or other assets such that a trustee acquires the virtual currency from a trustor or other third party). The present invention can be applied to a fund equity management system that manages the equity of limited liability companies, associations, and trusts that form the basis of investment funds. Fund equity is usually possessed by a general partner or a limited partner who formed the investment fund. However, there is a need to increase the commitment of an employee, a professional manager, or the like to improve a corporate value for an investee of investment funds by making it possible to transfer the whole or a part of this equity to the employee or the professional manager dispatched to the investee in the future. In the case of fund equity, there is a scheme in which a possessor of the fund equity entrust his/her own fund equity to be transferred to a future contributor (not only entrusts fund equity, but also may entrust money or other assets such that a trustee acquires the fund equity).

An issuing company 10 is a company that issues a share option targeted by the share option management system of the present embodiment. A trustor 11 is, for example, a manager or a shareholder of the issuing company 10. The issuing company 10 may make a contribution. With a conventional share option, an exercise price, grantees, and the number of grantees are determined at the time of issuing the share option, but the present embodiment targets a trust-type share option (market price-issued share option trust (registered trademark)). With the trust-type share option, an exercise price (or its formula) is determined at the time of issuing the share operation. Although a fixed number of share options are temporarily granted to a trustee in the trust of the share option, executives and employees or the like are not specifically determined as grantees, or a number of share options to be granted to such grantees is not determined. A person (which may be the issuing company 10, the trustor 11, or another person) designated as a designated beneficiary by the trustor 11 may then determine a grantee and a number of share options to be granted to the grantee according to the degree of contribution to the company, or the like.

The trustor 11 entrusts a share option to a first trustee 12 (first trust). In the present embodiment, the trustor 11 entrusts money to the first trustee 12. Since the establishment of this trust entails the transfer of property through the trust, it is taxed at a pre-determined tax rate in a case where requirements are prescribed by law. The trustor 11 may entrust a share option and cash to the first trustee 12 and pay tax with the cash.

Subsequently, the first trustee 12 pays the entrusted money to the issuing company 10 as payment for the share option. The issuing company 10 grants, to the first trustee 12, share options at an acquisition price calculated according to the current stock price, corresponding to the amount paid.

Thereafter, the first trustee 12 will continue to manage the entrusted share options until an event for designating a beneficiary of the trust occurs. Examples of an event for designating a beneficiary of trust include listing of the issuing company 10 that was unlisted at the time of establishment of the trust, or elapse of a predetermined period. The first trustee 12 may use the cash contributed by the trustor 11 to exercise the share options and convert the share options into shares. Instead of share options or call options, shares or money may be entrusted such that the trustee 12 acquires shares. Virtual currency may be entrusted, or money or other assets may be entrusted such that the trustee 12 acquires virtual currency.

In the present embodiment, prior to the occurrence of a beneficiary designation event in the first trust, in a case where a response indicating that a specific grantee is designated as a beneficiary for share options excluding those to be waived cannot be obtained and the trustor 11 or a different trustee further wishes to designate a specific grantee as a beneficiary afterward, the trustor 11 or the different trustee forms a new trust by contributing money or the like (second trust). Prior to the occurrence of a beneficiary designation event in the first trust, in a case where a response indicating that a specific beneficiary is designated conditionally is obtained, the trustor 11 or a different trustor forms a new trust by contributing money or the like (third trust). A trustor of the first trust and a trustor of the second trust or the third trust may be different. A trustee (first trustee) 12 of the first trust, a trustee (second trustee) 15 of the second trust, and a trustee (third trustee) 18 of the third trust may all be different. The second trust and the third trust may each be a single trust or a plurality of trusts. In a case where a beneficiary designation event occurs in the first trust, a person (beneficiary designation right holder 14) designated by the trustor 11 as a beneficiary designation right holder may designate the second trustee 15 and/or the third trustee 18 as a beneficiary of the first trust to take over share options to the second trustee 15 and/or the third trustee 18. As described above, by taking over the share options to the second trustee 15 at the time at which a beneficiary designation event in the first trust occurs, even after the beneficiary designation event in the first trust occurs, it is possible to leave a specific grantee (beneficiary) undetermined until a beneficiary designation event in the second trust occurs. Consequently, even an employee or the like who has contributed to the company after the designation of the beneficiary in the first trust can be granted share options at the same exercise price as when the first trust was established, and thus a number of share options according to the degree of contribution to the company or the like can be granted to an employee or the like. As described above, by taking over the share options to the third trustee 18 at the time at which the beneficiary designation event in the first trust occurs, even after the beneficiary designation event in the first trust occurs, it is possible to determine a specific grantee (beneficiary) and grant share options to the grantee after checking whether conditions have been fulfilled or not. In a case where requirements are prescribed by law, the trust property at the time at which the beneficiary designation event in the first trust occurs may be taken over as trust property of the second trust or the third trust according to a book value at that time by designated amounts (taking over the book value).
(1) When a beneficiary designation event occurs in the first trust, the beneficiary designation right holder 14 may waive all share options entrusted to the first trustee 12. A specific grantee and a number of share options to be granted to the grantee may be determined, and the share options may be granted to the determined grantee. A beneficiary 13 is a grantee to whom share options have been granted.
(2) When a beneficiary designation event occurs in the first trust, the beneficiary designation right holder 14 may determine a specific grantee and a number of share options to be granted to the grantee for share options entrusted to the first trustee 12, and may grant the share options to the determined grantee. The beneficiary designation right holder 14 may designate the second trustee 15 as a beneficiary for the remainder of the share options entrusted to the first trustee 12, which are not granted to the specific grantee.
(3) When a beneficiary designation event occurs in the first trust, the beneficiary designation right holder 14 may designate the second trustee 15 as a beneficiary for all share options entrusted to the first trustee 12.
(4) When a beneficiary designation event occurs in the first trust, the beneficiary designation right holder 14 may temporarily determine a specific grantee and then designate a trustee (third trustee 18) established for that grantee as a beneficiary for all share options entrusted to the first trustee 12, instead of designating a beneficiary according to the methods of (1) to (3). In this case, in a case where conditions under which the grantee is fixed as the beneficiary 19 in the trust (third trust) established for the grantee are determined in advance, and the conditions are satisfied, share options may be granted such that the grantee temporarily determined is the fixed beneficiary 19 without waiting for the occurrence of the beneficiary designation event. If the conditions are not satisfied, the share options may be granted to other beneficiaries including trustees of other trusts that are present at that time. If the beneficiary fixing conditions are not fulfilled, the beneficiary designation right holder 14 in the third trust may designate a beneficiary again. If the beneficiary fixing conditions are not fulfilled, the share options entrusted to the third trustee may be returned to the trustor 11 or the issuing company 10.

Although not shown in FIG 1, in a case where a beneficiary 19 is fixed as a beneficiary due to fulfillment of the conditions in the third trust, similarly to the beneficiary 13, share options can be executed for the issuing company 10 such that shares are acquired, and the shares can be sold on a stock market 20. The first trustee, and the second trustee and the third trustee will exercise the share options during a period in which the trustees manage the share options, to grant shares to the beneficiary 13 and the beneficiary 19.

In a case where a beneficiary designation event occurs in the second trust, in a case where the conditions are not fulfilled in the third trust, or in a case where a beneficiary designation event occurs in the third trust, the beneficiary designation right holder 14 may designate the next trustee or the same trustee as a beneficiary in the same manner as in a case where a beneficiary designation event occurs in the first trust. In a case where requirements are prescribed by law, the first trustee 12 and second trustee 15 or third trustee 18 may be different. In a case where requirements are prescribed by law, the first trustee 12, and the second trustee 15 and the third trustee 18 may be the same person as long as the trustees have predetermined qualifications. The first trustee 12, and the second trustee 15 and the third trustee 18 may be natural persons or legal entities. The beneficiary designation right holder in the first trust, the beneficiary designation right holder in the second trust, and the beneficiary designation right holder in the third trust may be different persons or may be the same person. The beneficiary designation right holder in the first trust, the beneficiary designation right holder in the second trust, and the beneficiary designation right holder in the third trust may be natural persons or legal entities.

Trustees (including the first trustee 12, the second trustee 15 and the third trustee 18) and beneficiaries (including the beneficiary 13 and the beneficiary 19) holding share options may execute the share options, that is, pay the exercise price to the issuing company 10, to acquire shares in the issuing company 10. The first trustee 12 may exercise the share options to acquire shares, and deliver the acquired shares to the beneficiary 13 (including the second trustee 15 and the third trustee 18). Trustees (including the first trustee 12, the second trustee 15, and the third trustee 18) and beneficiaries (including the beneficiary 13 and the beneficiary 19) holding share options can sell the acquired shares on the stock market 20.

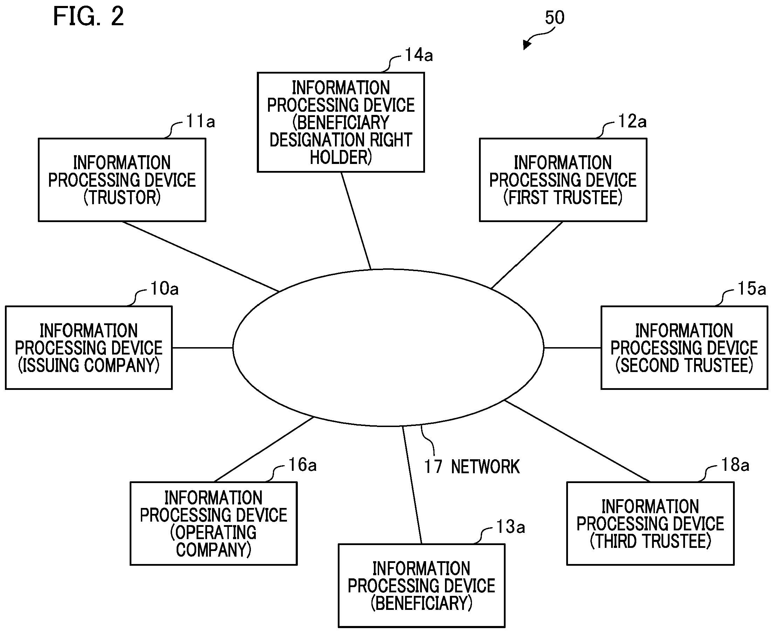

FIG 2 is a block diagram showing a schematic configuration of the share option management system 50 according to the first embodiment of the present invention. The share option management system 50 of the present embodiment is configured by connecting information processing devices 10a, 11a, 12a, 13a, 14a, 15a, 16a and 18a to each other via a network 17. The share option management system 50 manages trust of share options. The share option management system 50 implements the schemes described with reference to FIG 1.

The information processing device 10a is an information processing device operated by a person in charge of the issuing company 10. The information processing device 11a is an information processing device operated by the trustor 11. The information processing device 12a is an information processing device operated by the first trustee 12. The information processing device 13a is an information processing device operated by the beneficiary 13. The information processing device 14a is an information processing device operated by the beneficiary designation right holder 14. The beneficiary designation right holder may be a different person for each trust such as the first trust, the second trust and the third trust, or may be the same person. Here, these beneficiary designation right holders are typified by the beneficiary designation right holder 14. The information processing device 15a is an information processing device operated by the second trustee 15. The information processing device 16a is an information processing device operated by a person in charge of an operating company that operates the share option management system 50. The information processing device 18a is an information processing device operated by the third trustee 18. For the network 17, for example, the Internet is used, and any known network can be used regardless of whether the network is wired or wireless. The share option management system 50 may be configured without at least one of the information processing devices 10a, 11a, 12a, 13a, 14a, 15a, 16a and 18a. The share option management system 50 may have information processing devices other than the information processing devices 10a, 11a, 12a, 13a, 14a, 15a, 16a and 18a.

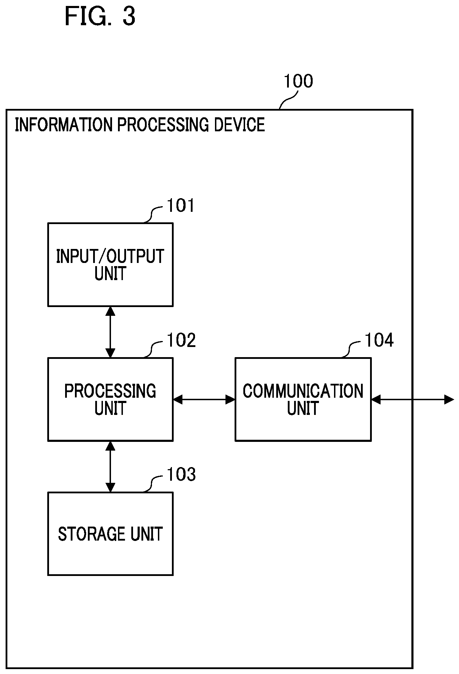

FIG 3 is a block diagram showing a configuration of each information processing device shown in FIG 2. FIG 3 shows configurations of the information processing devices 10a, 11a, 12a, 13a, 14a, 15a, 16a, and 18a shown in FIG 2 as a configuration of an information processing device 100. The information processing device 100 is at least one of the information processing devices 10a, 11a, 12a, 13a, 14a, 15a, 16a, and 18a. Each of the information processing devices 10a, 11a, 12a, 13a, 14a, 15a, 16a, and 18a may have the same configuration, or each information processing device may have a different configuration from the other information processing devices.

The information processing device 100 includes a processing unit 102 that performs various processes, an input/output unit 101 that performs input/output for an operator, a storage unit 103 that stores various types of data, and a communication unit 104 that performs communication via the network 17. The information processing device 100 is a computer. The information processing device 100 may be any computer. The information processing device 100 may be a device generally called a personal computer or a device generally called a supercomputer. The information processing device 100 may be a device called a smart phone or a tablet. The processing unit 102 is an arithmetic device called a CPU or an MPU. The processing unit 102 executes programs stored in the storage unit 103. The processing unit 102 stores various types of data related to information processing in the storage unit 103. The fact that the information processing device 100 registers information corresponds to the processing unit 102 storing the information in the storage unit 103. The storage unit 103 may be any known storage device such as a RAM, a ROM, a magnetic storage device, and an optical storage device. The input/output unit 101 is an input/output device such as a keyboard, a mouse, and a display. The processing unit 102 executes information processing according to information input by an operator via the input/output unit 101. The processing unit 102 executes information processing according to information input via the communication unit 104.

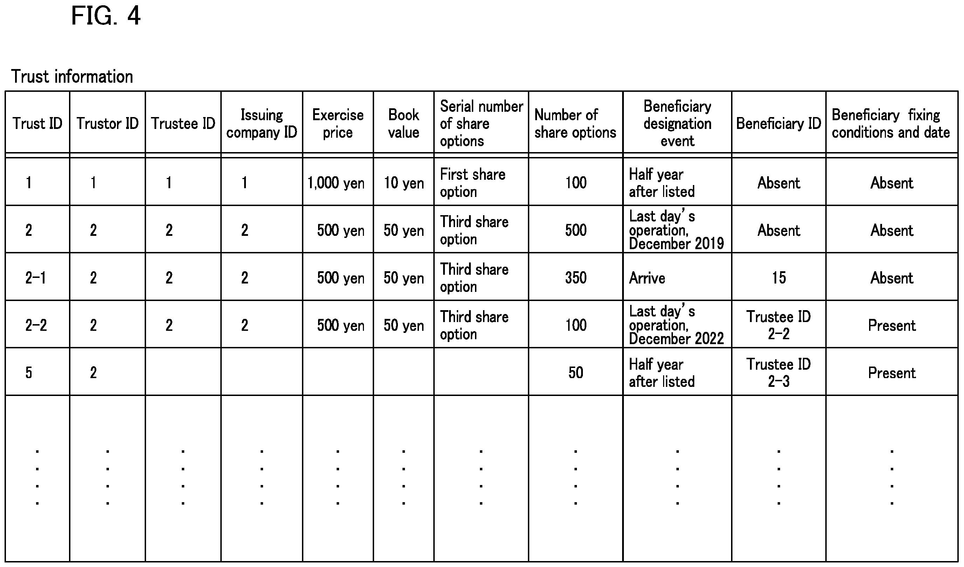

FIG 4 is a diagram showing an example of trust information stored in the storage unit 103 of the information processing device 16a shown in FIG 2. In the present embodiment, the trust information is stored in the information processing device 16a operated by the person in charge of the operating company that operates the share option management system 50. The trust information may be stored in another information processing device.

The share option management system 50 may also manage the trust of share options of which a beneficiary is determined. A trust ID included in the trust information is an ID for identifying each trust and is uniquely assigned to each trust. A trustor ID included in the trust information is an ID for identifying a trustor of the trust. A trustee ID included in the trust information is an ID for identifying a trustee of the trust. An issuing company ID included in the trust information is an ID for identifying an issuing company that issues the share options of the trust. An exercise price included in the trust information is an exercise price for the share options of the trust. A beneficiary designation event included in the trust information is an event or the date in or on which a beneficiary of the trust is designated. A book value included in the trust information is a sum of payment of the share options paid when a trustee of the trust was granted the share options, or the current price of the share options when the trustee of the trust is entrusted with the share options. A serial number of share options included in the trust information is a serial number of share options that are trust property of the trust. A number of share options included in the trust information is a number of share options that are trust property of the trust. Beneficiary information included in the trust information is information regarding a beneficiary of the share options of the trust. A beneficiary ID included in the beneficiary information is an ID for identifying the beneficiary. A number of share options included in the beneficiary information is a number of share options granted to the beneficiary. A number of share options is a number of share options entrusted with the trust ID when a beneficiary is not fixed.

A record with the trust ID of "1" in FIG 4 is a record related to a trust for simultaneously and collectively designating a beneficiary of all share options entrusted when a beneficiary designation event occurs (hereinafter referred to as a "collective delivery type trust")). Normally, there is no beneficiary of entrusted share options until a beneficiary designation event occurs. In this case, this trust is an unspecified beneficiary type trust.

A record with the trust ID of "2" in FIG 4 is a record related to a trust (hereinafter referred to as a "multiple-type trust") in which share options are entrusted and re-entrusted after a beneficiary designation event occurs. The multiple-type trust originally has the same details as those of the collective delivery type trust except for characteristics that beneficiary designation events are chained on a fixed date. In this case, the trust is an unspecified beneficiary type trust.

The record with the trust ID of "2-1" in FIG 4 is a trust related to a multiple-type trust, and is a record related to a beneficiary who has been fixed after the occurrence of the beneficiary designation event. This record shows a pattern in which a beneficiary designation event has arrived in a multiple-type trust, and a pattern in which the beneficiary has been decided and thus the trust has not been terminated.

A record with the trust ID of "2-2" in FIG 4 is a record related to a multiple-type trust, and is a record related to the second trust to which share options are taken over from the trust in which a beneficiary designation event has occurred. In this record, the issuing company ID, the exercise price, the book value, and the serial number of share options are taken over from the first trust. As for a number of share options, a number of share options to be taken over is registered.

In the trust information, in a case where a grantor is temporarily determined without fixing a beneficiary, the grantor is registered as a temporary one in the beneficiary column, but a trustee is registered as a beneficiary and is transferred to the third trust, a beneficiary there is designated as a grantee, and conditions and deadline for fixing a beneficiary are registered.

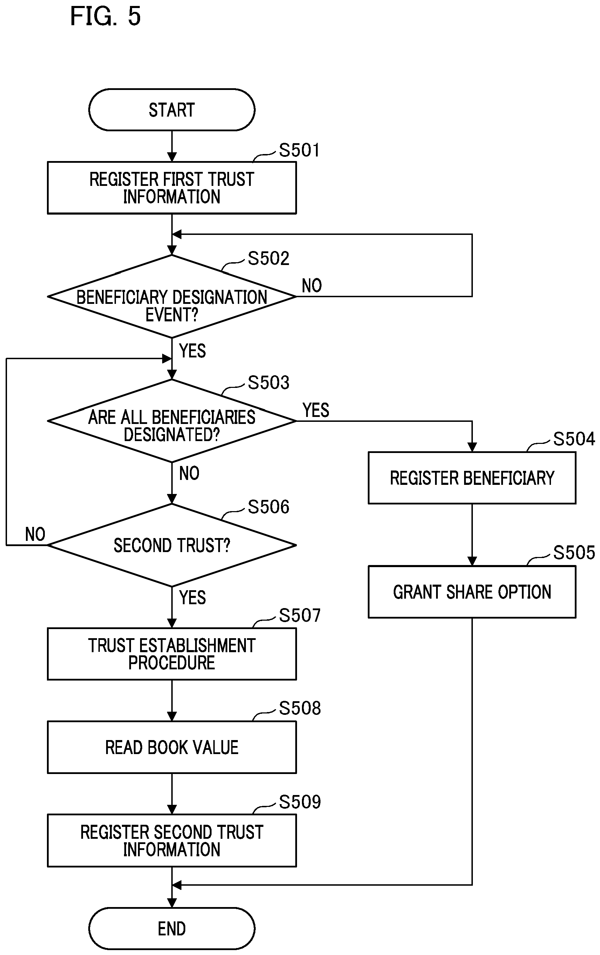

Hereinafter, an operation of the share option management system 50 of the present embodiment will be described. FIG 5 is a flowchart showing a process performed by the share option management system 50. The process performed by the share option management system 50 may be distributed and executed by the information processing devices 10a, 11a, 12a, 13a, 14a, 15a and 16a shown in FIG 2. For example, an information processing device other than the information processing device 16a may be used as an information input/output terminal device, and the information processing device 16a may perform information processing and information storage. In the present embodiment, the information processing device 16a performs information processing and information storage, and provides a user interface for information input/output to other information processing devices via the network 17.

The information processing device 16a issues in advance and registers each ID included in the trust information. In step S501 in FIG 5, the information processing device 16a registers each piece of the trust information in FIG 4 as first trust information in accordance with the occurrence of trust. In this case, in a case where the beneficiary information in the trust information is not determined, the beneficiary information is set to, for example, "absent". The information processing device 16a then registers the beneficiary information at the time at which the beneficiary information is determined. The information processing device 16a may execute a process of calculating commissions or expenses for the trust and billing them to the trustor 11 or the issuing company 10 while the trust is continued.

In step S502, the information processing device 16a determines a beneficiary designation event in the trust. Examples of the beneficiary designation event include listing of the issuing company 10 that was unlisted at the time of establishment of the trust, or elapse of a predetermined period. In step S502, the information processing device 16a determines whether a period is a certain period before the occurrence of the beneficiary designation event in the trust. The trustor 11, a person in charge of the issuing company 10, or a person in charge of the management company 16 may input whether a period is a certain period before the occurrence of the beneficiary designation event into the share option management system 50, and for example, the information processing device 16a may automatically determine the elapse of the trust period. The information processing device 16a continues the trust without any change in a case where a period is not the certain period before the occurrence of the beneficiary designation event. The information processing device 16a proceeds to step S503 in a case where a period is the certain period before the occurrence of the beneficiary designation event.

In step S503, the information processing device 16a inquires whether to designate all beneficiaries for the trust. In other words, this process corresponds to inquiring whether to continue the trust of share options related to the trust information of the first trust.

The inquiry in step S503 is made, for example, to the trustor 11 (for example, the information processing device 11a operated by the trustor 11). In a case where a person (beneficiary designation right holder 14) other than the trustor 11 is designated as a beneficiary designation right holder by the trustor 11, an inquiry is made to that person. For example, in a case where the beneficiary designation right holder 14 is the issuing company 10, an inquiry is made to the issuing company 10 (for example, the information processing device 10a operated by the person in charge of the issuing company 10). The issuing company 10 determines the degree of contribution to the company or the like, and designates a beneficiary to deliver share options to an employee or the like. The trustor 11 or the beneficiary designation right holder who receives the inquiry in step S503 responds as to whether or not to designate a beneficiary for all or some of the share options. In a case where the trustor 11 or the beneficiary designation right holder designates all beneficiaries, a beneficiary to be designated is input to the information processing device 11a or an information processing device operated by the beneficiary designation right holder, and the information processing device 16a receiving the information registers the information in the beneficiary information included in the trust information of the trust as a reservation (step S504). In a corporate taxation trust, all beneficiaries are required to be designated simultaneously and collectively. Therefore, in a case where the reservation registration or establishment of the second trust is completed before a beneficiary designation event occurs, beneficiaries including the second trustee at the time at which the beneficiary designation event occurs are fixed simultaneously and collectively. In a case where the trustor 11 or the beneficiary designation right holder 14 who receives the inquiry in step S503 does not reserve and register a beneficiary by inputting all share options into the information processing device 11a or the information processing device 14a, the information processing device 16a that has identified that fact notifies the trustor 11 or the beneficiary designation right holder 14, of that fact, and can thus cause the trustor 11 or another trustor to establish the second trust such that a trustee in the second trust can be designated as a beneficiary until a beneficiary designation event occurs (NO in step S503, YES in S506, and S507, S508, and S509). In this case, the trustor 11 or the beneficiary designation right holder 14 inputs a trustee of the second trust to the information processing device 11a or the information processing device 14a as a beneficiary, and the information processing device 16a receiving the information registers the information in the beneficiary information included in the trust information of the trust as a reservation (step S504). Among the share options related to the trust, all beneficiaries may be designated, not all beneficiaries may be designated, or some beneficiaries may be designated and remaining beneficiaries do not have to be designated. The trustor 11 or the beneficiary designation right holder may change the beneficiary information registered as a reservation in the information processing device 16a or add a beneficiary by using the information processing device 11a or the information processing device 14a until a beneficiary designation event occurs. In step S503, among the entrusted share options, a share option to be waived may be excluded from "all" and a process may be performed.

In step S503, first, the information processing device 16a executes a process of requesting the trustor 11 or the beneficiary designation right holder 14 to designate a beneficiary. This requesting process is, for example, a process of transmitting a request by e-mail or the like. In step S503, the information processing device 16a determines whether the trustor 11 or the beneficiary designation right holder 14 designates all beneficiaries in response to this request.

In a case where the trustor 11 or the beneficiary designation right holder 14 designates all of the beneficiaries, the information processing device 16a proceeds to step S504. In a case where all of the beneficiaries are not designated, the information processing device 16a proceeds to step S506.

In step S506, the information processing device 16a inquires whether to take over the share options to the second trust. In a case where the trustor 11 or the beneficiary designation right holder responds to this inquiry that the share options are taken over to the second trust, the process proceeds to step S507. In a case where the trustor 11 or the beneficiary designation right holder responds to this inquiry that the share options are not taken over to the second trust, the process returns to step S503, and designation of all beneficiaries (YES in S503) or take-over to the second trust (YES in S506) is waited for. Even if a beneficiary designation event occurs, in a case where neither all beneficiaries are designated nor share options are taken over to the second trust, a share option of which a beneficiary has not been designated among the entrusted share options is waived.

In step S507, the information processing device 16a advances a procedure of establishing the second trust by entrusting money or the like separately. For example, in the information processing device 11a or the information processing device 14a, when the trustor 11 or the beneficiary designation right holder 14 presses a fixation button, the information processing device 16a executes a process for advancing processes necessary for concluding a contract of the second trust. For example, the information processing device 16 executes a process of concluding a trust contract with an electronic signature, or a process of outputting a notification for prompting a trustee to contribute money.

The information processing device 16a notifies the trustee of the beneficiary reserved and registered in the trust information as a final beneficiary at the time at which a beneficiary designation event occurs, and thus the beneficiary is fixed.

In a case where the response in step S503 designates a beneficiary, in step S505, the information processing device 16a grants share options to the designated beneficiary in response to the occurrence of the beneficiary designation event. Specifically, the information processing device 16a notifies the trustee 12 to grant share options to the beneficiary 13 (the beneficiary registered in step S504) in response to the occurrence of the beneficiary designation event, and thus the beneficiary who has been reserved and registered is fixed as a beneficiary. The beneficiary designation event is assumed to include a process such as a corresponding committee's decision on designation of a beneficiary. Subsequently, the information processing device 16a registers that the trust for share options for which the beneficiary has been designated this time has been terminated, for example, in the trust information. Even after the beneficiary is designated, the trust may be continued without granting share options.

Since a beneficiary is essentially designated only once, in a case where a beneficiary is not designated, a procedure of designating a beneficiary of the second trust cannot be performed, but if a beneficiary is regulated as a reservation, beneficiaries can be regulated in a process before the arrival of a beneficiary designation event, and can thus be fixed simultaneously and collectively when the beneficiary designation event occurs. In a case where a beneficiary designation event occurs without designating a beneficiary including a trustee of the second trust, a process in which the issuing company is immediately notified and share options are waived is performed.

In step S508 following step S507, the information processing device 16a reads the book value from the trust information of the trust. Subsequently, in step S509, the information processing device 16a registers each piece of information of the trust information in FIG 4 as the second trust information for the trust. A new trust ID is assigned to the trust information of the second trust. The information processing device 16a uses the book value read in step S508 as a book value of the trust information of the second trust. The trustee of the second trust can take over share options, which are trust property, from the first trust as a beneficiary. In step S509, the information processing device 16a registers, in the trust information, for example, that, among share options of which a beneficiary has not been designated this time, trust of share options that have not been waived is taken over to the second trust such that the first trust is terminated.

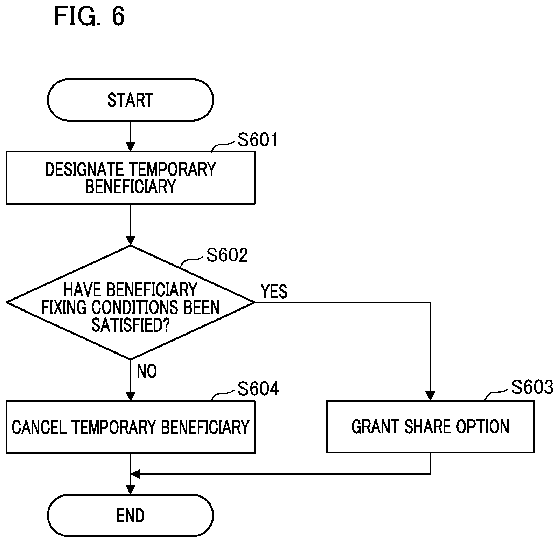

Regarding designation of a beneficiary, a grantee may be temporarily determined, and a trustee of trust established for that grantee may be designated as a beneficiary. If the trustee is suddenly fixed as a beneficiary, the trustor 11 may be dissatisfied with the beneficiary's lack of contribution to the issuing company 10 thereafter. Therefore, in the example described here, first, a grantee is temporarily determined, and then, for example, in a case where that person makes sufficient contribution (in a case where beneficiary fixing conditions are satisfied), the temporary grantee is fixed as a beneficiary.
hereinafter, an example of a process of designating a temporary grantee will be described below with reference to FIG 6.

Step S601 is, for example, a process that is executed in a case where, in S503 of FIG 5, a grantee is temporarily determined and a trustee of a trust established for that person is designated as a beneficiary. In this case, the information processing device 16a registers a person temporarily determined as a grantee and a trustee of trust set for that person in the trust information of the trust. In this case, a new trust ID is assigned to the trustee. The information processing device 16a uses the book value of the first trust read in step S506 as a book value of the new trust information. The trustee of such trust can take over share options, which are trust assets, from the first trust. In step S507, the information processing device 16a registers that the trust for which the grantee is temporarily determined this time has been taken over to the new trustee, and the first trust has been terminated, for example, in the trust information. In a case where the trustee is designated as a beneficiary, the share options are not transferred to the temporarily determined grantee, and in step S602, the information processing device 16a determines whether or not the beneficiary fixing conditions are satisfied. The beneficiary fixing conditions are satisfied, for example, in a case where a person temporarily determined as a grantee makes a predetermined contribution to the issuing company 10. The trustor 11 or the issuing company 10 may input whether or not the beneficiary fixing conditions have been satisfied. The trustee or the beneficiary designation right holder 14 may input results of hearing from the trustor 11, the issuing company 10, or the like.

In a case where the beneficiary fixing conditions are satisfied in step S602, the person temporarily determined as the grantee is fixed as a beneficiary of the trust established for that person. In step S603, the information processing device 16a registers the grantee temporarily determined in the trust information of the trust as a fixed beneficiary. The information processing device 16a grants share options to the fixed beneficiary. In other words, the information processing device 16a notifies the trustee (who may be the trustee 12 or may be another trustee) in the trust established for the grantee to grant the share options to the beneficiary 13 (fixed beneficiary).

In a case where the beneficiary fixing conditions are not satisfied in step S602, another beneficiary for whom the temporarily determined grantee definitively does not correspond to a beneficiary and who is specified in advance in the trust contract is a beneficiary (a beneficiary may be a trustee in another trust or may be other persons). The beneficiary designation right holder (who may be the beneficiary designation right holder 14 or may be another beneficiary designation right holder) may designate a beneficiary again. In step S604, the information processing device 16a deletes the temporary grantee from the trust information of the trust and registers the new beneficiary as a beneficiary. The information processing device 16a grants share options. That is, the information processing device 16a notifies the trustee 12 to grant share options to the beneficiary 13 (fixed beneficiary).

In the share option management system 50, temporarily determining a grantee in the first trust means designating a trustee in a trust established for the grantee as a beneficiary. In this case, when the beneficiary fixing conditions are satisfied, the temporary grantee is fixed as a beneficiary. In a case where the beneficiary fixing conditions are not satisfied, the share options can be returned from the trust established for the temporarily determined grantee to the first trust (or other trusts such as a trust in which a grantee is not temporarily determined and a beneficiary is not specified as in the second trust). That is, in this case, the share options are taken over to other trustees as trust property.

The above embodiment has mainly described the point that, in a case where all beneficiaries are not designated, the second trust is formed, and information regarding share options for which a beneficiary is not designated and which has not been waived is input into the second trust. According to the present invention, for example, the following processes can be executed by the information processing device 16a.
(1) A process of prompting formation of the second trust when there is insufficient exercise of a beneficiary designation right (transition to a contract conclusion process)
(2) In a case where (the contract conclusion process is completed) the formation of the second trust is completed,
   · A process of executing reservation registration for designating a trustee of the second trust as a beneficiary of the first trust,
   · In a case where a beneficiary of the first trust is not designated and a share option is not desired to be waived, a process of receiving a request for reservation registration for automatically designating a trustee of the second trust as a beneficiary of the first trust, and a process in which, at the time of a beneficiary designation event occurs, this is regarded as a beneficiary designation notification, and among share options for which the beneficiary designation event has occurred, information regarding a share option to be taken over to the second trust is taken over
(3) A process of automatically transmitting a transfer approval request and a trust property status report, which are required as requirements against third parties, to a trustor or an issuing company according to details of beneficiary designation

According to the present invention, for example, the following processes can be executed by the information processing device 16a. For example, regarding temporary determination of a grantee, in a case where "conditional distribution" in beneficiary designation is selected (reservation registration),
(1) A process of automatically prompting creation of the third trust (a trust for establishing a dedicated trust account),
(2) A process of registering that a beneficiary designation notice has been sent from an issuing company to a trustee when a beneficiary designation event occurs after the formation of this trust
(3) A process of automatically transmitting a transfer approval request and a trust property status report, which are required as requirements against third parties, to a trustor or an issuing company according to details of beneficiary designation

According to the share option management system 50 of the above-described embodiment,
the beneficiary designation right holder can the information processing device to select
(1) who will be an unconditional beneficiary,
(2) who will be a conditional beneficiary (whether the third trust will be formed),
(3) whether a share option will be transferred to the second trust without designating all beneficiaries, or
(4) whether a share option will be waived.

As for the third trust in (2), one trust is required to be created for each person, which causes a sharp increase in the number of trusts formed, but the share option management system 50 has
· means for automatically taking over the trust information of the first trust,
· means for transferring rights by regarding reservation registration as a notification of designation of a beneficiary when the deadline arrives, and
· means for automatically preparing a tax return and a trust property status report for each third trust formed for each person.

Therefore, according to the present invention, it is possible to achieve an effect of smoothly processing a large number of trusts that cannot be handled manually.

The share option management system according to the present invention has the following configuration.
(1) Means for transmitting an e-mail or the like for prompting designation of a beneficiary to an information processing device operated by a trustor or a beneficiary designation right holder as a beneficiary designation event approaches;
(2) Means for taking over information from trust information of the first trust to trust information of the second trust and the third trust (for example, taking over a book value); and
(3) Means for inquiring an information processing device operated by a trustor or a beneficiary designation right holder such that the trustor or the beneficiary designation right holder can select which of the following operations and means for receiving a response thereto, in addition to a case where all beneficiaries are unconditionally designated along with the beneficiary designation,
   (i) (waive)
   (ii) take over to a new trustee due to formation of the second trust, and
   (iii) take over to a new trustee for a conditional grantee due to the formation of the third trust,
(4) Means for transmitting a guidance for a procedure required to form the second trust and the third trust to an information processing operated by a trustor or a beneficiary designation right holder at a timing of forming the second trust and the third trust,
(5) Means for finally designating trustees of the second trust and the third trust as beneficiaries if the second trust and the third trust can be formed, and
(6) Means for generating necessary documents such as trust property status reports and tax returns required due to formation of a new trust.

According to the present invention, it is possible to achieve an effect of being capable of increasing the degree of freedom in selecting a trustor and a beneficiary designation right holder by selecting take-over to the second trust (without determining a grantee) and take-over to the third trust (temporary determination of a grantee and beneficiary fixing conditions added) in addition to designating a specific beneficiary.

According to the present invention, it is possible to achieve an effect that the next trust preparation (guidance, document generation, or the like) is automated according to a status of beneficiary designation of a trustor and a beneficiary designation right holder, and if a beneficiary designation event occurs after beneficiary designation (reservation registration) of the beneficiary designation right holder, a beneficiary is automatically designated, the property is taken over, and necessary documents are prepared, and thus to achieve a time saving effect and a cost reduction effect.
(1) According to the present invention, an information processing device includes first storage means for storing first trust information that is information indicating that share options have been entrusted from a trustor to a first trustee; inquiry means for inquiring whether to designate a beneficiary for all or some of the share options in a certain period of time before occurrence of a beneficiary designation event of a trust indicated by the first trust information; response receiving means for receiving a response to an inquiry from the inquiry means; and second storage means for, in a case where the response received by the response receiving means indicates that all beneficiaries are not designated, storing second trust information that is information indicating that, among the share options related to the first trust information, share options for which no beneficiary has been designated have been entrusted from the trustor to a second trustee. Consequently, even after termination of the first trust, the second trust can be continued, and a number of share options corresponding to the degree of contribution to a company can be granted to an employee or the like.

According to present invention, an information processing device includes first storage means for storing first trust information that is information indicating that share options have been entrusted from a trustor to a first trustee; inquiry means for inquiring whether to designate a beneficiary for all or some of the share options (or whether to waive the share options) in a certain period of time before occurrence of a beneficiary designation event of a trust indicated by the first trust information; response receiving means for receiving a response to an inquiry from the inquiry means; first information processing means for, in a case where the response received by the response receiving means indicates that a beneficiary is not designated for all share options except for share options to be waived, establishing in advance a second trust or a third trust in which a beneficiary designation event occurs after a beneficiary designation event in the first trust; second information processing means for designating a trustee (second trustee) in the second trust established by the first information processing means or a trustee (third trustee) in the third trust as a beneficiary for share options of which a beneficiary is not designated among share options related to the first trust information; and a second storage means or a third storage means for storing second trust information or third trust information that is information indicating that share options that are trust property of the first trust have been taken over to trust property of the second trust or the third trust in a case where the second trustee or the third trustee is designated as a beneficiary.

In the present invention, the information processing device may include means for, in a case where a beneficiary is designated for all share options, changing a holder of the share options from the trustee to the beneficiary.

The trustee of the second trust or the third trust is designated as a beneficiary of the first trust after the second trust or the third trust is formed.

(2) In the present invention, the information processing device further includes reading means for reading a book value of the share options included in the first trust information and related to the first trust information stored in the first storage means, in which the second storage means stores a book value of the share options included in the second trust information and related to in the second trust information, by taking over the book value read by the reading means without any change. Consequently, the second trust can be established at the same book value as the first trust, and the second trust can be continued even after the termination of the first trust. Therefore, a number of share options according to the degree of contribution to a company can be granted to an employee or the like in stages.

(3) According to the present invention, the information processing device further includes second reading means for reading beneficiary information that is information regarding a trust beneficiary of the share options and is included in the first trust information stored in the first storage means; third reading means for reading the beneficiary designation event included in the first trust information stored in the first storage means; second inquiry means for inquiring whether to grant share options to a beneficiary identified by a beneficiary ID included in the beneficiary information read by the second reading means during a certain period prior to occurrence of the beneficiary designation event read by the third reading means; second response receiving means for receiving a response to an inquiry from the second inquiry means; and granting means for granting share options to a beneficiary for whom the response received by the second response receiving means indicates that a share option is to be granted, in which the second storage means stores the second trust information by continuing a trust of share options other than the share options granted by the granting means among the share options related to the first trust information. Consequently, the share options related to the first trust can be classified into share options of which a trust is terminated in the first trust and share options of which a trust is continued in the second trust and thus flexibility is achieved, so that a number of share options according to the degree of contribution to a company or the like can be granted to an employee or the like.

(4) According to the present invention, the information processing device further includes second reading means for reading beneficiary information that is information regarding a trust beneficiary of the share options and is included in the first trust information stored in the first storage means; third reading means for reading the beneficiary designation event included in the first trust information stored in the first storage means; second inquiry means for inquiring whether to grant share options to a beneficiary identified by a beneficiary ID included in the beneficiary information read by the second reading means during a certain period prior to occurrence of the beneficiary designation event read by the third reading means; second response receiving means for receiving a response to an inquiry from the second inquiry means; and granting means for granting share options to a beneficiary for whom the response received by the second response receiving means indicates that a share option is to be granted, in which the second storage means temporarily determines a grantee for share options other than the share options granted by the granting means among the share options related to the trust information of the first trust, stores conditions for fixing a beneficiary, and stores trust information of the second trust by continuing a trust by designating a trustee in the trust established for the grantee as a beneficiary in a case where the grantee is temporarily determined. Consequently, the share options related to the first trust can be classified into share options of which a trust is terminated in the first trust and share options of which a trust is continued in the second trust, and it is possible to finally determine whether to grant share options according to the degree of contribution to a company after a grantee is temporarily determined. Therefore, flexibility is further achieved, and a number of share options according to the degree of contribution to a company or the like can be granted to an employee or the like.

Although the preferred embodiments of the present invention have been described above, the present invention is not limited to these embodiments, and various modifications and changes can be made within the scope of the concept thereof. These embodiments and their modifications are included in the scope and the concept of the invention, and are included in the scope of the invention described in the claims and equivalents thereof.

This application is based upon and claims the benefit of priority from Japanese Patent Application No. 2020-126360, filed July 27, 2020; the entire contents of which are incorporated herein by reference.

### [Reference Signs List]

10 Issuing company
11 Trustor
12 First trustee
13 Beneficiary
14 Beneficiary designation right holder
15 Second trustee
18 Third trustee
19 Beneficiary
20 Stock market

## Claims

1. An information processing device comprising:
first storage means for storing first trust information that is information indicating that share options have been entrusted from a trustor to a first trustee;
inquiry means for inquiring whether to designate a beneficiary for all or some of the share options in a certain period of time before occurrence of a beneficiary designation event of a trust indicated by the first trust information;
response receiving means for receiving a response to an inquiry from the inquiry means; and
second storage means for, in a case where the response received by the response receiving means indicates that all beneficiaries are not designated, storing second trust information that is information indicating that, among the share options related to the first trust information, share options for which no beneficiary has been designated have been entrusted from the trustor to a second trustee.

2. The information processing device according to claim 1, further comprising:
reading means for reading a book value of the share options included in the first trust information and related to the first trust information stored in the first storage means, wherein
the second storage means stores a book value of the share options included in the second trust information and related to in the second trust information, by taking over the book value from the book value read by the reading means.

3. The information processing device according to claim 1 or 2, wherein
when a beneficiary is designated, a temporary grantee is designated, and is then fixed as a beneficiary when beneficiary fixing conditions are satisfied.

4. A control method for an information processing device, comprising:
a first storage step of storing first trust information that is information indicating that share options have been entrusted from a trustor to a first trustee;
an inquiry step of inquiring whether to designate a beneficiary for all or some of the share options in a certain period of time before occurrence of a beneficiary designation event of a trust indicated by the first trust information;
a response receiving step for receiving a response to an inquiry in the inquiry step;
a second storage step of, in a case where the response received in the response receiving step indicates that all beneficiaries are not designated, storing second trust information that is information indicating that, among the share options related to the first trust information, share options for which no beneficiary has been designated have been entrusted from the trustor to a second trustee.

5. A program causing a computer to function as each means provided in the information processing device according to any one of claims 1 to 3.
